# EUROPÄISCHE PATENTSCHRIFT

(11) **EP 1 876 885 B1**
(45) Veröffentlichungstag und Bekanntmachung des Hinweises auf die Patenterteilung: **11.04.2012**
(21) Anmeldenummer: 06742347.5
(22) Anmeldetag: 02.05.2006
(51) Int. Cl.: A01K 27/00, A01K 15/02

(54) **SPENDEVORRICHTUNG MIT FERNSTEUERBAREM SPENDER ZUR AUSGABE VON SPENDEGUT FÜR EIN TIER SOWIE EIN ENTSPRECHENDES VERFAHREN**
DISPENSER DEVICE WITH REMOTE-CONTROLLED DISPENSER FOR THE RELEASE OF DISPENSER MATERIALS FOR AN ANIMAL AND CORRESPONDING METHOD
DISPOSITIF DE DISTRIBUTION A DISTRIBUTEUR ACTIONNE PAR TELECOMMANDE POUR SORTIE D'UN PRODUIT A DISTRIBUER A UN ANIMAL, ET PROCEDE CORRESPONDANT

(30) Priorität: 04.05.2005 DE 102005021878; 24.06.2005 DE 202005010461 U; 07.07.2005 DE 202005010805 U; 19.07.2005 DE 202005011651 U; 05.02.2006 DE 202006002067 U
(43) Veröffentlichungstag der Anmeldung: 16.01.2008
(73) Patentinhaber: Groß, Fritz, 70435 Stuttgart (DE)
(72) Erfinder: Groß, Fritz, 70435 Stuttgart (DE)
(74) Vertreter: Gleiss & Grosse
(86) Internationale Anmeldenummer: PCT/DE2006/000839
(87) Internationale Veröffentlichungsnummer: WO 2006/116994

(56) Entgegenhaltungen:
- WO-A1-01/37649
- DE-U1- 20 011 847
- US-A- 4 627 385
- US-A- 5 046 453
- US-B1- 6 415 742
- US-B1- 6 886 739
- FRITZ GROSS: 'Modernes Hundtraining mit Belohnungen', ISBN 978-3-932799-

## Beschreibung

Die Erfindung betrifft eine Spendevorrichtung, insbesondere Belohnungsspendevorrichtung, mit mindestens einem Spender zur Ausgabe eines Spendeguts für ein Tier, insbesondere für einen Hund, wobei der Spender mit mindestens einer Spendegutaufnahme und mit einer Befestigungseinrichtung zum Mitführen ausgestattet ist.

Eine Spendevorrichtung der vorstehend genannten Art ist bekannt. Sie besteht aus einem tragbaren Spender mit einer Spendegutaufnahme und einer Befestigungseinrichtung wie zum Beispiel einem Clip, der es einer Person ermöglicht, den Spender mitzuführen, ohne die Bewegungsfreiheit der Person einzuschränken. Möchte die Person - im Folgenden Bezugsperson genannt - dem Tier das Spendegut oder einen Teil des Spendeguts zukommen lassen, so öffnet sie den Spender und kann das Spendegut aus der Spendegutaufnahme entnehmen und an das Tier, zum Beispiel durch Zuwerfen, ausgeben. Soll das Tier das Spendegut zur Belohnung gezielt erhalten, kommt es darauf an, dass das Spendegut im richtigen Moment verabreicht wird, da das Tier zeitlich zu weit auseinanderliegende Ereignisse nicht miteinander in Verbindung bringen kann. Um den Zusammenhang zwischen seinem Tun und der Ausgabe der Belohnung erkennen zu können, muss die Ausgabe des Spendeguts als Belohnung unmittelbar auf die zu belohnende Aktion des Tieres folgen. Nur so kann ein entsprechendes Training des Tieres Erfolg haben.
Ein Spendevorrichtung ist aus WO-A-0137649 bekannt.

Dei Erfindung liegt die Aufgabe zugrunde, eine Spendevorrichtung der vorstehend genannten Art zu schaffen, bei der dem Tier das

Spendegut zu einem von der Bezugsperson bestimmbaren Zeitpunkt direkt zugänglich gemacht wird, um einen gewünschten Trainingserfolg zu erreichen.

Diese Aufgabe wird durch die Merkmale des Anspruchs 1 getest.

Erfindungsgemäß weist die Spendevorrichtung den Spender und mindestens einen Signalgeber auf, dass der Spender einen durch Fernsteuerung betätigbaren Ausgabemechanismus zur Ausgabe des oder eines Anteils des Spendeguts besitzt, dass zum Mitführen des Spenders am Tier die Befestigungseinrichtung als Tierbefestigungseinrichtung ausgebildet ist und dass der von dem Tier nicht mitzuführende Signalgeber zur ferngesteuerten Betätigung des Ausgabemechanismus ausgebildet ist. Wesentlich ist dabei, dass mit einer derartigen Spendevorrichtung im Gegensatz zu einer aus dem Stand der Technik bekannten Spendevorrichtung der Spender vom Tier selbst an der Tierbefestigungseinrichtung mitgeführt wird und mittels des Signalgebers ferngesteuert betätigt werden kann. Durch diese Spendevorrichtung ist die Ausgabe des Spendeguts unabhängig von dem räumlichen Abstand zwischen Signalgeber und Spender möglich. Sie erlaubt ein unmittelbares Betätigen des Ausgabemechanismus des Spenders per Fernwirkung, wobei sich der Ausgabeort des Spendeguts mit der Position des Tieres ändert. Durch eine derartige Spendevorrichtung kann eine Bezugsperson dem Tier das oder einen Anteil des Spendeguts direkt zukommen lassen. Dabei verbindet das Tier die Ausgabe des Spendeguts vornehmlich mit der vorherrschenden Situation und nicht mit der Bezugsperson oder einer Interaktion mit der Bezugsperson.

Erfindungsgemäß ist das Spendegut Futter, insbesondere Belohnungsfutter, und/oder Spielzeug. Futter oder ein geeignetes Spielzeug als Spendegut wird vom Tier als Belohnung empfunden.

Ferner ist nach einer Weiterbildung der Erfindung vorgesehen, dass die Ausgabe des Spendeguts in einen Umgebungsbereich des Tieres erfolgt. Diese zusätzliche Maßnahme hat den Vorteil, dass das Spendegut dem Tier unmittelbar zugänglich wird und das Tier keine weitere, von der zu belohnenden Situation ablenkende Aktion durchführen muss. Bei einer derartigen Ausgabe des Spendeguts kann dieses zum Beispiel vor dem Tier auf den Boden fallen oder in den Wahrnehmungsbereich des Tieres ausgeworfen werden.

Erfindungsgemäß weist der Spender einen Auffangbehälter zum Auffangen des ausgegebenen Spendeguts auf der vom Tier erreichbar ist. Ein derartiger Auffangbehälter erhöht die Akzeptanz des Spenders beim Tier und sorgt dafür, dass das Tier das Spendegut auch bei schlechten Bodenverhältnissen leicht finden kann.

Nach einer Weiterbildung der Erfindung ist vorgesehen, dass die Tierbefestigungseinrichtung als separates Befestigungsgeschirr ausgebildet ist. Der Spender wird an diesem Befestigungsgeschirr befestigt. Das Befestigungsgeschirr kann ein bereits vorhandenes Befestigungsgeschirr sein, das zum Beispiel zum Anbringen einer Leine genutzt wird.

Insbesondere ist vorgesehen, dass das Befestigungsgeschirr ein Halsband oder ein Brustgeschirr ist. Diese Arten von Befestigungsgeschirren sind für viele Tierarten bekannt.

Weiterhin ist vorgesehen, dass der Spender an der Tierbefestigungseinrichtung mittels mindestens eines Zwischenelements befestigbar befestigt ist. Insbesondere bei Befestigungsgeschirren, die nicht nur zur Befestigung des Spenders dienen, ist ein als Adapter wirkendes Zwischenelement zur Befestigung notwendig.

Insbesondere ist vorgesehen, dass das Zwischenelement ein Karabinerhaken, eine Lasche oder ein Klettband ist.

Nach einer Weiterbildung der Erfindung ist vorgesehen, dass die Fernsteuerung drahtlos, insbesondere über Funk, Infrarot oder Ultraschall arbeitet. Bei Fernsteuerungen, die auf diesen Übertragungswegen basieren, ist ein hinreichend großer Arbeitsbereich gewährleistet. Eine drahtlose Signalübertragung gewährt dabei maximale Flexibilität für das Tier und die Bezugsperson.

Insbesondere ist vorgesehen, dass der Signalgeber einen Sender und der Spender einen Empfänger für die ferngesteuerte Betätigung aufweist.

Weiterhin ist vorgesehen, dass der Signalgeber durch eine Auslösevorrichtung betätigbar ist.

Insbesondere ist vorgesehen, dass die Auslösevorrichtung den Signalgeber in Abhängigkeit von mindestens einem Auslösesignal auslöst, das als manueller Fingerdruck, Zeitschaltsignal, Bewegungsmeldesignal oder Positionserfassungssignal ausgebildet ist. Neben dem manuellen Auslösen durch die Bezugsperson (was einer Fernbedienung entspricht) kann der Ausgabemechanismus des Spenders auch durch andere Eingangssignale des Signalgebers ausgelöst werden. Diese können von der Umwelt - also unabhängig von dem Tier oder der Bezugsperson - oder zum Beispiel auch durch das Tier selbst über ein Bewegungsmelde- oder Positionserfässungssignal ausgelöst werden.

Weiterhin ist vorgesehen, dass der Spender und der Signalgeber elektrisch betrieben werden und jeweils mindestens einen elektrischen Speicher zur elektrischen Versorgung aufweisen. Da beide Bestandteile der Spendevorrichtung (Signalgeber und Spender) mobil verwendet werden, wird ihre Spannungsversorgung vorzugsweise von einem elektrischen Speicher wie zum Beispiel einer Batterie oder einem Akkumulator gewährleistet.

Weiterhin ist vorgesehen, dass der Spender mindestens einen Elektromotor zum Antrieb des Ausgabemechanismus aufweist.

Nach einer Weiterbildung der Erfindung ist vorgesehen, dass das Spendegut vorportioniertes Spendegut ist. Dabei kann es sich zum Beispiel um zu Kugeln oder Pellets verpresstes Trockenfutter handeln.

Insbesondere ist vorgesehen, dass der Ausgabemechanismus Teil einer Portioniervorrichtung ist, mit der das Spendegut in Portionen ausgebbar ist. Soll nicht das gesamte Spendegut aus der Spendegutaufnahme "am Stück" ausgegeben werden, so teilt eine Portioniervorrichtung das Spendegut auf und gibt es über den Ausgabemechanismus portioniert aus.

Nach einer Weiterbildung der Erfindung ist vorgesehen, dass die Portioniervorrichtung mindestens ein Portionierbehältnis aufweist. Das Volumen des Portionierbehältnisses gibt dabei die Größe der Portion-vor. Die portioniervorrichtung kann dabei mehrere Portionierbehältnisse - insbesondere unterschiedlicher Größe - aufweisen, sodass von dem Ausgabemechanismus Portionen unterschiedlicher Größe ausgegeben werden können.

Insbesondere ist vorgesehen, dass mit der Portioniervorrichtung ein portionsweiser Transport des Spendeguts von der Spendegutaufnahme zu einem Ausgabebereich erfolgt. Zur Ausgabe des portionierten Spendeguts wird ein Teil des Spendeguts der Spendegutaufnahme durch die Portioniervorrichtung entnommen und zu einem Ausgabebereich verbracht. Dazu wird zum Beispiel das Portionierbehältnis zunächst mit der Spendegutaufnahme in Kontakt gebracht, sodass ein Teil des Spendeguts in das Portionierbehältnis gefüllt wird. Anschließend wird das Portionierbehältnis mit dem Ausgabebereich in Kontakt gebracht, um den Inhalt des Portionierbehältnisses über den Ausgabemechanismus auszugeben.

Weiterhin ist vorgesehen, dass die Portioniervorrichtung zum Transport des Spendeguts eine Spindel aufweist. Mit einer Spindel kann auf einfache Weise ein linearer Transport des Spendeguts aus einer Rotationsbewegung des Antriebs generiert werden.

Insbesondere ist vorgesehen, dass die Spendegutaufnahme eine verschließbare Einfüllöffnung aufweist. Durch diese Einfüllöffnung wird die Spendegutaufnahme befüllt.

Nach einer Weiterbildung der Erfindung ist vorgesehen, dass der Spender mindestens einen Reizgeber aufweist, der in zeitlichem Zusammenhang mit der Ausgabe des Spendeguts oder einer Portion des Spendeguts einen zusätzlichen Reiz an das Tier abgibt. Ein entsprechender Reiz zeigt dem Tier an, dass Spendegut ausgegeben wurde, sodass das Tier schnell lernt, nach der Spendegutportion zu suchen.

Insbesondere ist vorgesehen, dass der Reiz ein optischer Reiz, ein akustischer Reiz, ein Vibrationsreiz, ein Luftstoß oder ein Kontaktreiz ist. Derartige Reize sind geeignet, um die Aufmerksamkeit des Tieres zu erregen.

Die Erfindung betrifft ferner ein Verfahren, insbesondere Belohnungsverfahren, zur Ausgabe eines Spendeguts aus einer Spendegutaufnahme mindestens eines mitgeführten Spenders an ein Tier, insbesondere an einen Hund. Dabei ist vorgesehen, dass das Tier den Spender an einer Tierbefestigungseinrichtung mitführt und dass der Spender einen Ausgabemechanismus zum Ausgeben des oder eines Anteils des Spendeguts aufweist, der mit mindestens einem vom Tier nicht mitgeführten Signalgeber ferngesteuert betätigt wird.

Nach einer Weiterbildung der Erfindung ist vorgesehen, dass die Spendegutausgabe in einem Arbeitsbereich des Signalgebers unabhängig von der Position des Tieres erfolgt. Die Ortsunabhängigkeit der Bezugsperson bei Spendeausgabe erleichtert es dem Tier, den Zusammenhang zwischen der vorherrschenden Situation und der Ausgabe des Spendeguts zu begreifen.

Weiterhin ist vorteilhaft, dass die Spendegutausgabe unmittelbar auf die ferngesteuerte Betätigung erfolgt. Mit möglichst geringem Zeitverzug bei der Ausgabe des Spendeguts können besonders gute Trainingserfolge erzielt werden.

Ferner ist es vorteilhaft, wenn das Spendegut in die unmittelbare Umgebung des Tieres ausgegeben wird. Das Tier verbindet die Spendegutausgabe dadurch nicht mit einem speziellen Ort oder einer speziellen Bezugsperson.

Schließlich ist es vorteilhaft, dass das Spendegut zur Belohnung eines Verhaltens des Tieres ausgegeben wird. Durch ein entsprechendes Training, das auf der positiven Bestätigung durch dieses Belohnungsverfahren beruht, kann dem Tier eine gewünschte Verhaltensweise antrainiert werden.

Die Erfindung wird nachfolgend in mehreren Ausführungsbeispielen anhand der zugehörigen Zeichnungen näher erläutert. Es zeigen:
- Figuren 1a bis 1d: mögliche Ausführungsformen eines Spenders und dessen Befestigung,
- Figuren 2a bis 2f: mögliche Ausführungsformen des Spenders mit alternativem Ausgabemechanismus,
- Figuren 3a bis 3d: weitere Ausführungsformen des Spenders und dessen Ausgabemechanismus und
- Figuren 4a bis 4c: Spendervorrichtung mit Spender und Signalgeber und mögliche Anwendungen.

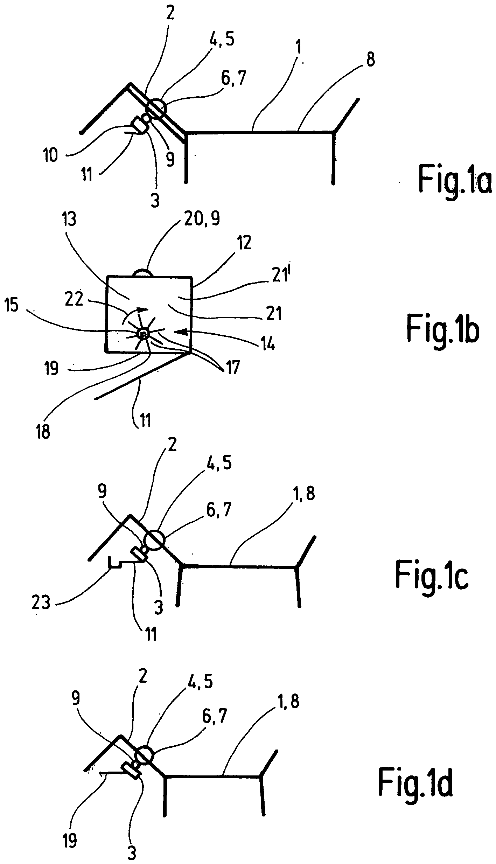

Die Figur 1a zeigt eine schematische Darstellung eines Tieres 1, an dessen Hals 2 ein Spender 3 über eine als Tierbefestigungseinrichtung 4 ausgebildete Befestigungseinrichtung 5 angebracht ist. Die Tierbefestigungseinrichtung 4 kann zum Beispiel als separates Befestigungsgeschirr 6 ausgebildet sein, wobei das in Figur 1a dargestellte Befestigungsgeschirr 6 ein Halsband 7 eines Hundes 8 ist. Zwischen dem Halsband 7 und dem Spender 3 befindet sich ein Zwischenelement 9, mit dem der Spender 3 an dem als Halsband 7 ausgebildeten Befestigungsgeschirr 6 befestigt ist. Auf einer dem Zwischenelement 9 gegenüberliegenden Seite des Spenders 3 befindet sich der in Figur 1b dargestellte Ausgabebereich 10 des Spenders 3. Unterhalb dieses Ausgabebereichs 10 ist eine Führungsschiene 11 angebracht. Die Figur 1b zeigt weitere Details des Spenders 3. Der Spender 3 weist ein Gehäuse 12 auf, in dem sich eine Spendegutaufnahme 13 und eine Portioniervorrichtung 14 befindet. Die Portioniervorrichtung 14 besteht aus einem Flügelrad 15, das zwischen seinen Flügeln 16 jeweils ein Portionierbehältnis 17 vorgibt. Unterhalb des Flügelrads 15 weist das Gehäuse 12 eine Öffnung 18 auf, die den Ausgabebereich 10 des Spenders 3 bildet. Im oberen Außenbereich des Gehäuses 12 ist ein als Lasche 20 ausgebildetes Zwischenelement 9 angeordnet, an dem der Spender 3 am Befestigungsgeschirr 6 befestigt werden kann.

Es ergibt sich folgende Funktion des Spenders 3: In der Spendegutaufnahme 13 befindet sich Spendegut 21, das in die Portionierbehältnis 17 (Fächer 17') des Flügelrads 15 gelangt und durch Drehung des Flügelrads (Pfeil 22) zum Ausgabebereich 10 transportiert wird. Dabei ist das Spendegut 21 insbesondere Futter 21' für das Tier. Im Ausgabebereich 10 fällt das Spendegut 21 portionsweise aus der Öffnung 18 auf die Führungsschiene 11, um so direkt in einen vom Tier leicht erreichbaren Umgebungsbereich des Tieres 1 zu gelangen.

Die Abbildung 1 c zeigt einen Spender 3 mit Führungsschiene 11, bei dem am Ende der Führungsschiene ein Auffangbehälter 23 angebracht ist. Ein vom Spender 3 ausgegebenes Spendegut 21 wird nach Ausgabe aus der Öffnung 18 entlang der Führungsschiene 11 bis in den Auffangbehälter 23 geführt. Die Figur 1d zeigt eine Anordnung, die im Wesentlichen der Figur 1a entspricht, wobei die Führungsschiene 11 durch ein ausfahrbares Gestänge 19 ersetzt ist, das das Spendegut 21 zum Beispiel bis zu dem Maul, der Schnauze, etc. des Tieres 1 heranführt.

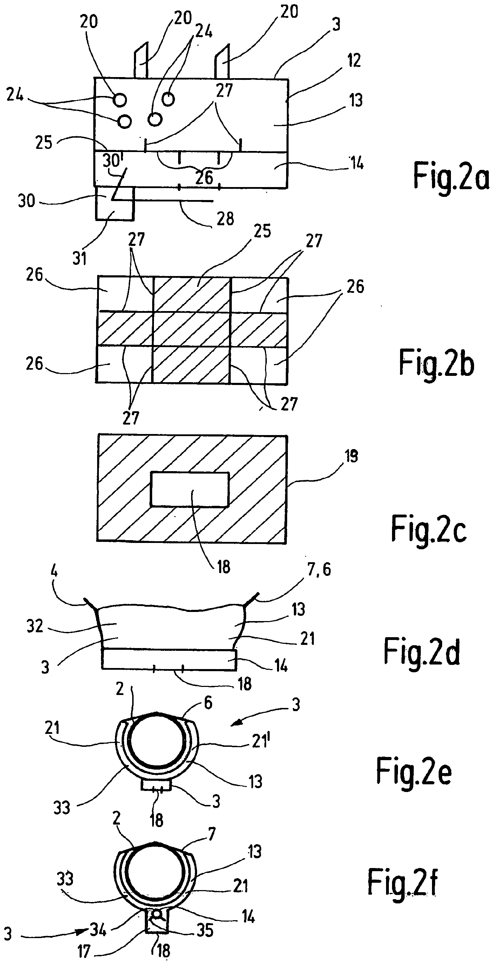

Die Abbildungen 2a bis 2c zeigen die schematische Darstellung eines weiteren Ausführungsbeispiels des Spenders 3. Die Figur 2a zeigt einen Schnitt durch den Spender 3, der in seinem oberen Endbereich zwei Laschen 20 zur Befestigung am Befestigungsgeschirr 6 aufweist, Im Inneren des Gehäuses 12 befindet sich im oberen Teil die Spendeaufnahme 13 mit vorportioniertem Spendegut 24. Die Spendegutaufnahme 13 ist gegenüber einer unterhalb der Spendegutaufnahme 13 befindlichen Portioniervorrichtung 14 durch eine Zwischenwand 25 mit Öffnungen 26 getrennt. In einem Bodenbereich 19 der Portioniervorrichtung 14 befindet sich die Ausgabeöffnung 18, die durch eine Klappe 28 oder einen Schieber 28' geöffnet/verschlossen werden kann. Die Klappe 28 beziehungsweise der Schieber 28' werden dazu von einem als Elektromotor 29 ausgebildeten elektrischen Antriebs 30 verschwenkt beziehungsweise verschoben. Dabei kann der elektrischen Antrieb 30 über ein Bewegungselement 30' im Inneren des Spenders 3 das Spendegut 21 (in der Portioniervorrichtung 14 oder in der Spendegutaufnahme 13) bewegen, um ein Verkeilen des Spendeguts 21 -insbesondere des vorportionierten Spendeguts 24- zu verhindern. Die Geräuschentwicklung des elektrischen Antriebs 30 kann als akustischer Reiz bei der Ausgabe des Spendeguts 21 genutzt werden.

Es ergibt sich folgende Funktion des Spenders 3: Durch die Bewegung des Tieres 1 gelangt vorportioniertes Spendegut 24 durch die geeignet groß gewählten Öffnungen 26 in die Portioniervorrichtung 14. Durch ferngesteuerte Betätigung des Ausgabemechanismus 31 wird der Elektromotor 29 angesteuert, der die Klappe 28 beziehungsweise den Schieber 28' für eine gewisse Zeit öffnet. Während dieser Zeit gelangt vorportioniertes Spendegut 24 - verzögert durch die Zwischenwand 25 - über die Portioniervorrichtung 14 in den Ausgabebereich 10.

Die Figuren 2d bis 2f zeigen konkrete Ausführungsformen der Spendegutaufnahme 13. In Figur 2d ist die Spendegutaufnahme 13 als Beutel 32 ausgebildet. In den Figuren 2e und 2f ist die Spendegutaufnahme 13 als mindestens ein Schlauch 33 ausgebildet, der rechts und links am Befestigungsgeschirr 6 entlang verläuft und an diesem befestigt ist. Möglich ist auch eine Ausführungsform, bei der die Tierbefestigungseinrichtung 4 die Spendegutaufnahme 13 als Schlauch 33 aufweist. Die Figur 2f zeigt einen gegenüber der Figur 2e veränderten Ausgabemechanismus 31 des Spenders 3, bei dem die Ausgabe der des vorportionierten Spendeguts 24 durch ein Servo 34 erfolgt, dessen Hebel 35 sich nach rechts und links bewegen kann und abwechselnd von beiden Seiten der am Befestigungsgeschirr 6 befestigten Spendegutaufnahme 13 Spendegut 21 freigibt, das anschließend - zum Beispiel über eine Portioniervorrichtung 14 - zum Ausgabebereich 10 gelangt.

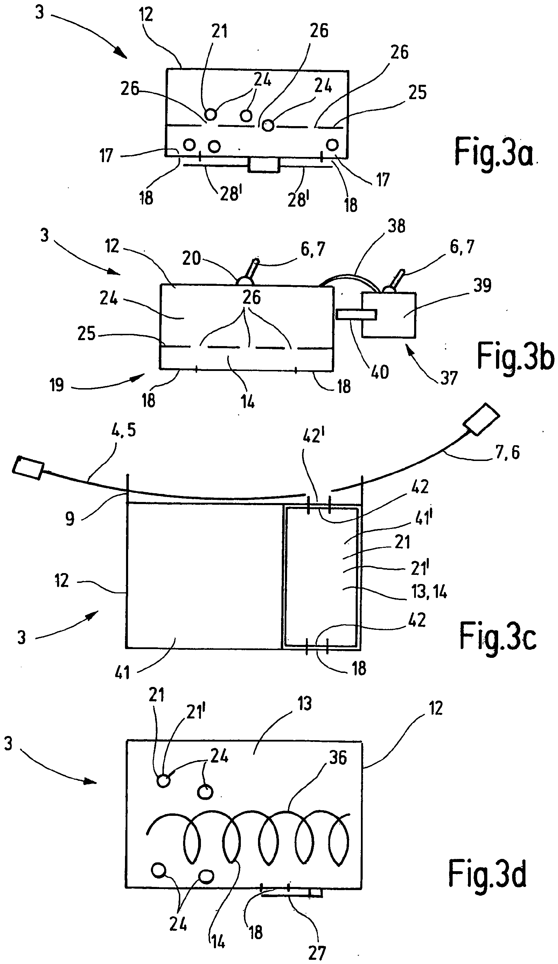

Die Figuren 3a und 3b zeigen die Ausführungsform des Spenders 3 mit der Zwischenwand 25 aus der Abbildung 2a, wobei hier nur auf die Unterschiede eingegangen wird. Auf einer der Zwischenwand 25 gegenüberliegenden Unterseite der Portioniervorrichtung 14 befinden sich mehrere als Fächer 17' ausgebildete Portionierbehältnisse 17, die durch die Bewegung des Tiers 1 befüllt werden. Diese Befüllung der Fächer 17' wird jedoch durch die Größe und Anzahl der Öffnungen 26 in der Zwischenwand 25 beschränkt. Betätigt ein Bediener den Ausgabemechanismus 31 durch Fernsteuerung, so wird einer der Ausgabeöffnungen 18 geöffnet und das Spendegut 24 wird ausgegeben. Die Figur 3b zeigt eine zusätzliche Erschütterungsvorrichtung 37, die über ein Verbindungselement 38 außen am Gehäuse 12 des Spenders 3 befestigt ist und einen elektrischen Antrieb 39 besitzt, mit dem ein auskragender Bolzen 40 hin- und herbewegt werden kann. Bei Aktivierung schlägt der Bolzen 40 durch die Hin- und Herbewegung gegen das Gehäuse 12 und sorgt für einen Transport des vorportionierten Spendeguts 24 aus der Spendegutaufnahme 13 in die Portionierbehältnis 17 der Portioniervorrichtung 14. Durch einen in der Figur 3b nicht dargestellten Schieber 28' kann das vorportionierte Spendegut 24 aus den Portionierbehältnissen 17 in den Ausgabebereich 10 gelangen und wird aus dem Spender 3 ausgegeben. Die Figur 3c zeigt eine schematische Gesamtansicht eines an einem Befestigungsgeschirr 6 befestigten Spenders 3, der in einem Bereich 41 seine elektrischen Komponenten wie eine Batterie beziehungsweise einen Akkumulator, den Elektromotor und weitere Komponenten des elektrischen Antriebs aufnimmt. In einem weiteren Bereich 41' befindet sich die Spendegutaufnahme 13, die beweglich gelagert ist und gleichzeitig als Portioniervorrichtung 14 wirkt. Dazu weist die Spendegutaufnahme 13 mindestens eine Öffnung 42 auf, die durch Verlagerung in einer bestimmten Position mit der Ausgabeöffnung 18 im Gehäuse 12 des Spenders 3 fluchtend angeordnet werden kann. Wird die Öffnung 42 über die Ausgabeöffnung 18 bewegt, so wird portioniert ein Teil des Spendeguts 21 oder vorportionierten Spendeguts 24 ausgegeben. Zum Einfüllen des Spendeguts 21, 24 besitzt der Spender 3 eine Einfüllöffnung 42'. Eine alternative Ausführung des Spenders ist in Figur 3d gezeigt, bei der eine Spindel 36 das vorportionierte Spendegut 24 von der Spendegutaufnahme 13 zur Ausgabeöffnung 18 transportiert, die durch eine Klappe 28 geöffnet/verschlossen werden kann.

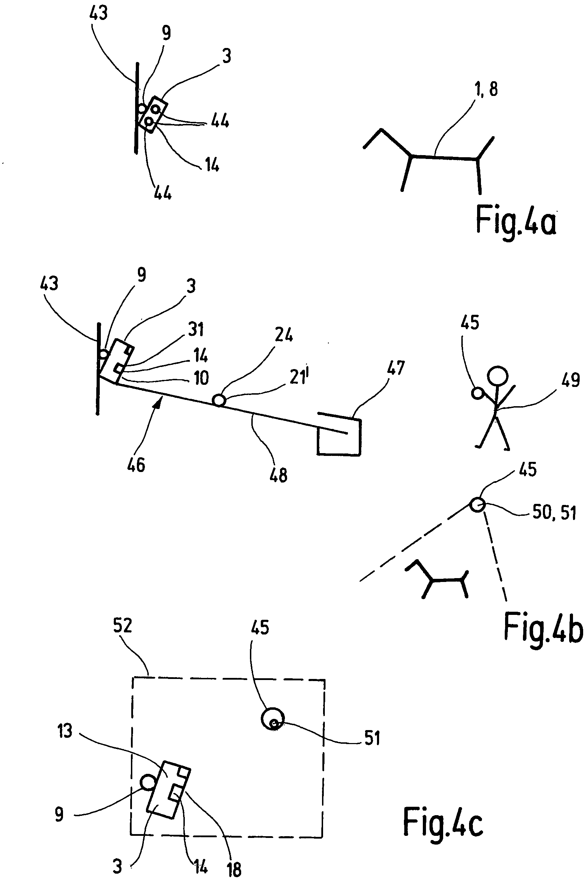

Die Figuren 4a und 4b zeigen eine stationäre Nutzung des Spenders 3, der zu diesem Zweck an der Wand 43 installiert ist. Figur 4a zeigt den mittels des Zwischenelements 9 an der Wand 43 befestigten Spender 3, der zwei Reizgeber 44 aufweist. Die Reizgeber geben in zeitlichem Zusammenhang mit der Ausgabe des Spendeguts 21 zum Beispiel einen akustischen und einen visuellen Reiz aus. Der Ausgabemechanismus wird auch bei der stationären Nutzung des Spenders 3 durch Fernsteuerung mit dem Signalgeber 45 betätigt. Dazu weist der Spender 3 einen Empfänger 46 auf. Figur 4b zeigt eine alternative stationäre Nutzung, bei der der Auslösemechanismus des Spenders 3 durch den Signalgeber 45 ausgelöst wird und Spendegut entlang einer als Bahn 47 ausgebildeten Führungsschiene 11 in Richtung einer Einlassöffnung einer gut verschlossenen Box 48 rutscht. Gleichzeitig kann vom Reizgeber 44 ein Reiz (zum Beispiel optischer oder akustischer Reiz) ausgegeben werden. Die Bahn 47 kann in der Länge durch Ausziehen einer ausfahrbaren Schiene 47' verlängert werden und gibt eine Zeitspanne vor, die dem Tier 1 verbleibt, bis das Spendegut 21 beziehungsweise vorportionierte Spendegut 24 in der Box 48 für das Tier 1 unzugänglich verschwindet. Alternativ zum manuellen Auslösen des Signalgebers 45 durch eine Bezugsperson 49 kann der Ausgabemechanismus 31 zum Beispiel auch durch eine als Positionserfassungsvorrichtung 50 ausgebildete Auslösevorrichtung 51 des Signalgebers 45 ausgelöst werden. Diese kann in Zusammenhang mit einem unabhängigen oder einem in den Spender 3 integrierten Positionssignalgeber arbeiten. Eine solche Anordnung kann zum Trainieren der Sinne des Tieres 1 genutzt werden. Die Positionserfassung kann dabei zum Beispiel über einen Infrarotmelder, eine Lichtschranke, einen Erschütterungssensor oder einen Berührungssensor erfolgen.

Der Spender 3 mit der Tierbefestigungseinrichtung 4 und dem Signalgeber 45 zum ferngesteuerten Betätigen des Ausgabemechanismus 31 des Spenders 3 bilden zusammen die Spendevorrichtung 52 (Figur 4c).

Der Ausgabemechanismus 31 kann zusätzlich zur Betätigung über Fernsteuerung per Signalgeber 45 auch manuell am Spender 3 auslösbar sein. Zusätzlich können weitere Eingangsgrößen die Ausgabe des Spendeguts 21 beeinflussen, wie zum Beispiel die Ausrichtung des Spenders 3, eine in den Spender 3 integrierte Zeitschaltuhr oder eine Einrichtung (beziehungsweise ein Aufbau) des Spenders 3, die die Ausgabe willkürlich nach dem Zufallsprinzip beeinflusst.

Neben einer efindungsgemäßen Nutzung des Spenders 3 am Tier 1 kann dieser neben einer stationären Nutzung zum Beispiel auch am Menschen oder an anderen Lebewesen genutzt werden.

Der Spender kann auch zur ferngesteuerten Ausgabe von Medikamenten, sonstigen Substanzen und Gegenständen als Spendegut 21 genutzt werden. Der Spender 3 eignet sich durch die Portioniervorrichtung 14 auch zur dosierten Abgabe von Medikamenten, sonstigen Substanzen und Gegenständen.

## Patentansprüche

1. Belohnungsspendevorrichtung, mit mindestens einem Spender zur Ausgabe eines Belohungsfutters für ein Tier, insbesondere für einen Hund, wobei der Spender mit mindestens einer Spendegutaufnahme und mit einer Befestigungseinrichtung zum Mitführen ausgestattet ist, wobei die Spendevorrichtung (52) den Spender (3) und mindestens einen Signalgeber (45) aufweist, wobei der Spender (3) einen durch Fernsteuerung betätigbaren Ausgabemechanismus (31) zur Ausgabe des oder eines Anteils des Belohnungsfutters (21) besitzt, und wobei zum Mitführen des Spenders (3) am Tier (1) die Befestigungseinrichtung (5) als Tierbefestigungseinrichtung (4) und der von dem Tier nicht mitzuführende Signalgeber (45) zur ferngesteuerten Betätigung des Ausgabemechanismus (31) ausgebildet sind, **dadurch gekennzeichnet, dass** der Spender (3) einen Auffangbehälter (23) zum Auffangen des ausgegebenen Spendeguts (21) aufweist, der vom Tier (1) erreichbar ist.

2. Spendevorrichtung nach Anspruch 1, **dadurch gekennzeichnet, dass** das Spendegut Futter (21'), insbesondere Belohnungsfutter, und/oder Spielzeug ist.

3. Spendevorrichtung nach einem der vorhergehenden Ansprüche, **dadurch gekennzeichnet, dass** die Ausgabe des Spendeguts (21) in einem Umgebungsbereich des Tieres (1) erfolgt.

4. Spendevorrichtung nach einem der vorhergehenden Ansprüche, **dadurch gekennzeichnet, dass** der Spender (3) einen Auffangbehälter (23) zum Auffangen des ausgegebenen Spendeguts (21) aufweist, der vom Tier (1) erreichbar ist.

5. Spendevorrichtung nach einem der vorhergehenden Ansprüche, **dadurch gekennzeichnet, dass** die Tierbefestigungseinrichtung (4) als separates Befestigungsgeschirr (6) ausgebildet ist.

6. Spendevorrichtung nach einem der vorhergehenden Ansprüche, **dadurch gekennzeichnet, dass** das Befestigungsgeschirr (6) ein Halsband (7) oder ein Brustgeschirr ist.

7. Spendevorrichtung nach einem der vorhergehenden Ansprüche, **dadurch gekennzeichnet, dass** die Tierbefestigungseinrichtung (4) ein Bestandteil der Spendevorrichtung (52) ist und insbesondere an dem Spender (3) verbleibend befestigt ist.

8. Spendevorrichtung nach einem der vorhergehenden Ansprüche, **dadurch gekennzeichnet, dass** der Spender (3) an der Tierbefestigungseinrichtung (4) mittels mindestens eines Zwischenelements (9) befestigbar befestigt ist.

9. Spendevorrichtung nach einem der vorhergehenden Ansprüche, **dadurch gekennzeichnet, dass** das Zwischenelement (9) ein Karabinerhaken, eine Lasche (20) oder ein Klettband ist.

10. Spendevorrichtung nach einem der vorhergehenden Ansprüche, **dadurch gekennzeichnet, dass** die Fernsteuerung drahtlos, insbesondere über Funk, Infrarot oder Ultraschall arbeitet.

11. Spendevorrichtung nach einem der vorhergehenden Ansprüche, **dadurch gekennzeichnet, dass** der Signalgeber (45) einen Sender und der Spender (3) einen Empfänger (46) für die ferngesteuerte Betätigung aufweist.

12. Spendevorrichtung nach einem der vorhergehenden Ansprüche, **dadurch gekennzeichnet, dass** der Signalgeber (45) durch eine Auslösevorrichtung (51) betätigbar ist.

13. Spendevorrichtung nach einem der vorhergehenden Ansprüche, **dadurch gekennzeichnet, dass** die Auslösevorrichtung (51) den Signalgeber (45) in Abhängigkeit von mindestens einem Auslösesignal auslöst, das als manueller Fingerdruck, Zeitschaltsignal, Bewegungsmeldesignal oder Positionserfassungssignal ausgebildet ist.

14. Spendevorrichtung nach einem der vorhergehenden Ansprüche, **dadurch gekennzeichnet, dass** der Spender (3) und der Signalgeber (45) elektrisch betrieben werden und jeweils mindestens einen elektrischen Speicher zur Versorgung aufweisen.

15. Spendevorrichtung nach einem der vorhergehenden Ansprüche, **dadurch gekennzeichnet, dass** der Spender (3) mindestens einen Elektromotor (29) zum Antrieb des Ausgabemechanismus (31) aufweist.

16. Spendevorrichtung nach einem der vorhergehenden Ansprüche, **dadurch gekennzeichnet, dass** das Spendegut (21) vorportioniertes Spendegut (24) ist.

17. Spendevorrichtung nach einem der vorhergehenden Ansprüche, **dadurch gekennzeichnet, dass** der Ausgabemechanismus (31) Teil einer Portioniervorrichtung (14) ist, mit der das Spendegut (21,24) in Portionen ausgebbar ist.

18. Spendevorrichtung nach einem der vorhergehenden Ansprüche, **dadurch gekennzeichnet, dass** die Portioniervorrichtung (14) mindestens ein Portionierbehältnis (17) aufweist.

19. Spendevorrichtung nach einem der vorhergehenden Ansprüche, **dadurch gekennzeichnet, dass** ein portionsweiser Transport des Spendeguts (21,24) durch die Portioniervorrichtung (14) erfolgt.

20. Spendevorrichtung nach einem der vorhergehenden Ansprüche, **dadurch gekennzeichnet, dass** die Portioniervorrichtung (14) zum Transport des Spendeguts (21,24) eine Spindel (36) aufweist.

21. Spendevorrichtung nach einem der vorhergehenden Ansprüche, **dadurch gekennzeichnet, dass** die Spendegutaufnahme (13) eine verschließbare Einfüllöffnung (42') aufweist.

22. Spendevorrichtung nach einem der vorhergehenden Ansprüche, **dadurch gekennzeichnet, dass** der Spender mindestens einen Reizgeber (44) aufweist, der in zeitlichem Zusammenhang mit der Ausgabe des Spendeguts (21,24) oder einer Portion des Spendeguts (21,24) einen zusätzlichen Reiz an das Tier (1) abgibt.

23. Spendevorrichtung nach einem der vorhergehenden Ansprüche, **dadurch gekennzeichnet, dass** der Reiz ein optischer Reiz, ein akustischer Reiz, ein Vibrationsreiz, ein Luftstoß oder ein Kontaktreiz ist.

24. Belohungsverfahren zur Ausgabe von Belohnungsfutter aus einer Spendegutaufnahme mindestens eines mitgeführten Spenders an ein Tier, insbesondere an einen Hund, wobei das Tier den Spender an einer Tierbefestigungseinrichtung mitführt, und wobei der Spender einen Ausgabemechanismus zum Ausgeben des oder eines Anteils des Belohnungsfutters aufweist, der mit mindestens einem vom Tier nicht mitgeführten Signalgeber ferngesteuert betätigt wird, **dadurch gekennzeichnet, dass** das Belohnungsfutter in einen Auffangbehälter des Spenders ausgegeben wird, der vom Tier erreichbar ist.

25. Verfahren nach Anspruch 24, **dadurch gekennzeichnet, dass** die Spendegutausgabe in einem Arbeitsbereich des Signalgebers unabhängig von der Position des Tieres erfolgt.

26. Verfahren nach einem der vorhergehenden Ansprüche, **dadurch gekennzeichnet, dass** die Spendegutausgabe unmittelbar auf die ferngesteuerte Betätigung erfolgt.

27. Verfahren nach einem der vorhergehenden Ansprüche, **dadurch gekennzeichnet, dass** das Spendegut in die unmittelbare Umgebung des Tieres ausgegeben wird.

28. Verfahren nach einem der vorhergehenden Ansprüche, **dadurch gekennzeichnet, dass** das Spendegut zur Belohnung eines Verhaltens des Tieres ausgegeben wird.

## Claims

1. A reward dispensing device having at least one dispenser for releasing a food reward for an animal, particularly for a dog, the dispenser being equipped with at least one receptacle for the dispensing material and a fastening device for carrying purposes, wherein the dispensing device (52) comprises the dispenser (3) and at least one signal transmitter (45), wherein the dispenser (3) has a release mechanism (31) operable by remote control for the release of the food reward (21) or of a portion thereof, and wherein, for the purpose of carrying the dispenser (3) on the animal (1), the fastening device (5) is configured as an animal fastening device (4), and the signal transmitter (45), which is not to be carried by the animal, is configured for the remote-controlled operation of the release mechanism (31), **characterised in that** the dispenser (3) has a collection container (23) for collecting the released dispensing material (21), the collection container being reachable by the animal (1).

2. The dispensing device according to claim 1, **characterised in that** the dispensing material is food (21'), particularly a food reward, and/or a toy.

3. The dispensing device according to any one of the preceding claims, **characterised in that** the release of the dispensing material (21) is effected in an area surrounding the animal (1).

4. The dispensing device according to any one of the preceding claims, **characterised in that** the dispenser (3) has a collection container (23) for collecting the released dispensing material (21), the collection container being reachable by the animal (1).

5. The dispensing device according to any one of the preceding claims, **characterised in that** the animal fastening device (4) is configured as a separate fastening harness (6).

6. The dispensing device according to any one of the preceding claims, **characterised in that** the fastening harness (6) is a collar (7) or a chest harness.

7. The dispensing device according to any one of the preceding claims, **characterised in that** the animal fastening device (4) is part of the dispensing device (52) and is particularly fixed in a permanent manner to the dispenser (3).

8. The dispensing device according to any one of the preceding claims, **characterised in that** the dispenser (3) can be fixed to the animal fastening device (4) in a fixable manner by means of at least one intermediate element (9).

9. The dispensing device according to any one of the preceding claims, **characterised in that** the intermediate element (9) is a spring hook, a lug (20) or a hook-and-loop tape.

10. The dispensing device according to any one of the preceding claims, **characterised in that** the remote control operates in a wireless manner, particularly by means of radio, infrared or ultrasound.

11. The dispensing device according to any one of the preceding claims, **characterised in that** the signal transmitter (45) has a transmitter and the dispenser (3) has a receiver (46) for remote-controlled operation.

12. The dispensing device according to any one of the preceding claims, **characterised in that** the signal transmitter (45) can be operated by means of a triggering device (51).

13. The dispensing device according to any one of the preceding claims, **characterised in that** the triggering device (51) triggers the signal transmitter (45) depending on at least one triggering signal that is configured as a manual press of a finger, a time switching signal, a motion control signal or a position detection signal.

14. The dispensing device according to any one of the preceding claims, **characterised in that** the dispenser (3) and the signal transmitter (45) are operated electrically and each have at least one electrical storage means for their power supply.

15. The dispensing device according to any one of the preceding claims, **characterised in that** the dispenser (3) has at least one electric motor (29) for driving the release mechanism (31).

16. The dispensing device according to any one of the preceding claims, **characterised in that** the dispensing material (21) is preportioned dispensing material (24).

17. The dispensing device according to any one of the preceding claims, **characterised in that** the release mechanism (31) is part of a portioning device (14) through which the dispensing material (21, 24) can be released in portions.

18. The dispensing device according to any one of the preceding claims, **characterised in that** the portioning device (14) has at least one portioning container (17).

19. The dispensing device according to any one of the preceding claims, **characterised in that** the transport of the dispensing material (21, 24) is effected in portions by the portioning device (14).

20. The dispensing device according to any one of the preceding claims, **characterised in that** the portioning device (14) has a spindle (36) for the transport of the dispensing material (21, 24).

21. The dispensing device according to any one of the preceding claims, **characterised in that** the receptacle (13) for the dispensing material has a closable filling opening (42').

22. The dispensing device according to any one of the preceding claims, **characterised in that** the dispenser has at least one stimulus transmitter (44) which releases an additional stimulus to the animal (1) in a timely correlation with the release of the dispensing material (21, 24) or the release of a portion of the dispensing material (21, 24).

23. The dispensing device according to any one of the preceding claims, **characterised in that** the stimulus is an optical stimulus, an acoustic stimulus, a vibration stimulus, a blast of air or a tactile stimulus.

24. Reward method for releasing a food reward to an animal, particularly to a dog, from a receptacle for dispensing material of at least one dispenser carried along, wherein the animal carries the dispenser along on an animal fastening device, and wherein the dispenser has a release mechanism for releasing the food reward or a portion thereof, the release mechanism being operable by remote control by means of at least one signal transmitter not carried along by the animal, **characterised in that** the food reward is released into a collection container of the dispenser that can be reached by the animal.

25. The method according to claim 24, **characterised in that** the release of dispensing material is effected in an operating range of the signal transmitter independently from the position of the animal.

26. The method according to any one of the preceding claims, **characterised in that** the release of dispensing material is effected immediately after the operation of the remote control.

27. The method according to any one of the preceding claims, **characterised in that** the dispensing material is released into the immediate surroundings of the animal.

28. The method according to any one of the preceding claims, **characterised in that** the dispensing material is released to reward a behaviour of the animal.

## Revendications

1. Dispositif distributeur de récompense, comportant au moins un distributeur destiné à la délivrance d'une récompense sous forme de nourriture pour un animal, en particulier pour un chien, dans lequel le distributeur est équipé d'au moins un réceptacle pour le matériau à distribuer et d'un dispositif de fixation pour le transport, dans lequel le dispositif distributeur (52) présente le distributeur (3) et au moins un émetteur de signaux (45), dans lequel le distributeur (3) dispose d'un mécanisme de délivrance (31) actionnable via commande à distance en vue de délivrer une récompense sous forme de nourriture (21) ou une partie de cette dernière, et dans lequel le dispositif de fixation (5) est conçu sous forme de dispositif de fixation à l'animal (4) en vue du transport du distributeur (3) sur l'animal (1) et l'émetteur de signal (45), qui n'est pas transporté par l'animal, est conçu en vue de l'actionnement commandé à distance du mécanisme de délivrance (31), **caractérisé en ce que** le distributeur (3) présente un bac de récupération (23) destiné à recueillir le matériau à distribuer délivré (21), le bac étant accessible par l'animal (1).

2. Dispositif distributeur selon la revendication 1, **caractérisé en ce que** le matériau à distribuer est de la nourriture (21'), en particulier une récompense sous forme de nourriture, et/ou un jouet.

3. Dispositif distributeur selon l'une quelconque des revendications précédentes, **caractérisé en ce que** la délivrance du matériau à distribuer (21) s'effectue à proximité de l'animal (1).

4. Dispositif distributeur selon l'une quelconque des revendications précédentes, **caractérisé en ce que** le distributeur (3) présente un bac de récupération (23) destiné à recueillir le matériau à distribuer délivré (21), le bac étant accessible par l'animal (1).

5. Dispositif distributeur selon l'une quelconque des revendications précédentes, **caractérisé en ce que** le dispositif de fixation à l'animal (4) est conçu sous forme de harnais de fixation séparé (6).

6. Dispositif distributeur selon l'une quelconque des revendications précédentes, **caractérisé en ce que** le harnais de fixation (6) est un collier (7) ou un harnais dorsal.

7. Dispositif distributeur selon l'une quelconque des revendications précédentes, **caractérisé en ce que** le dispositif de fixation à l'animal (4) fait partie intégrante du dispositif distributeur (52) et est fixé en particulier de manière résiduelle sur le distributeur (3).

8. Dispositif distributeur selon l'une quelconque des revendications précédentes, **caractérisé en ce que** le distributeur (3) est fixé sur le dispositif de fixation à l'animal (4) de manière fixable au moyen d'au moins un élément intermédiaire (9).

9. Dispositif distributeur selon l'une quelconque des revendications précédentes, **caractérisé en ce que** l'élément intermédiaire (9) est un mousqueton, une attache (20) ou une bande auto-agrippante.

10. Dispositif distributeur selon l'une quelconque des revendications précédentes, **caractérisé en ce que** la commande à distance fonctionne sans fil, en particulier par radio, infrarouge ou ultrason.

11. Dispositif distributeur selon l'une quelconque des revendications précédentes, **caractérisé en ce que** l'émetteur de signal (45) présente un émetteur et le distributeur (3) présente un récepteur (46) en vue de l'actionnement commandé à distance.

12. Dispositif distributeur selon l'une quelconque des revendications précédentes, **caractérisé en ce que** l'émetteur de signal (45) est actionnable par l'intermédiaire d'un dispositif de déclenchement (51).

13. Dispositif distributeur selon l'une quelconque des revendications précédentes, **caractérisé en ce que** le dispositif de déclenchement (51) déclenche l'émetteur de signal (45) en fonction d'au moins un signal de déclenchement qui consiste en une pression du doigt manuelle, en un signal de cadencement, en un signal de détection de présence ou en un signal d'enregistrement de position.

14. Dispositif distributeur selon l'une quelconque des revendications précédentes, **caractérisé en ce que** le distributeur (3) et l'émetteur de signal (45) sont commandés électriquement et présentent respectivement au moins un accumulateur électrique pour leur alimentation.

15. Dispositif distributeur selon l'une quelconque des revendications précédentes, **caractérisé en ce que** le distributeur (3) présente au moins un moteur électrique (29) pour l'actionnement du mécanisme de délivrance (31).

16. Dispositif distributeur selon l'une quelconque des revendications précédentes, **caractérisé en ce que** le matériau à distribuer (21) est du matériau à distribuer préportionné (24).

17. Dispositif distributeur selon l'une quelconque des revendications précédentes, **caractérisé en ce que** le mécanisme de délivrance (31) fait partie d'un dispositif portionneur (14) au moyen duquel le matériau à distribuer (21, 24) peut être délivré en portions.

18. Dispositif distributeur selon l'une quelconque des revendications précédentes, **caractérisé en ce que** le dispositif portionneur (14) présente au moins un récipient portionneur (17).

19. Dispositif distributeur selon l'une quelconque des revendications précédentes, **caractérisé en ce que** le transport du matériau à distribuer (21, 24) via le dispositif portionneur (14) s'effectue par portions.

20. Dispositif distributeur selon l'une quelconque des revendications précédentes, **caractérisé en ce que** le dispositif portionneur (14) présente une tige filetée (36) destiné au transport du matériau à distribuer (21, 24).

21. Dispositif distributeur selon l'une quelconque des revendications précédentes, **caractérisé en ce que** le réceptacle pour le matériau à distribuer (13) présente un orifice de remplissage refermable (42').

22. Dispositif distributeur selon l'une quelconque des revendications précédentes, **caractérisé en ce que** le distributeur présente au moins un émetteur de stimuli (44) qui émet un stimulus additionnel à l'animal (1) en corrélation temporelle que la délivrance du matériau à distribuer (21, 24) ou d'une portion du matériau à distribuer (21, 24).

23. Dispositif distributeur selon l'une quelconque des revendications précédentes, **caractérisé en ce que** le stimulus est un stimulus visuel, un stimulus acoustique, un stimulus de vibration, un souffle d'air ou un stimulus de contact.

24. Procédé de récompense pour délivrer à un animal, en particulier à un chien, une récompense sous forme de nourriture à partir d'un réceptacle pour le matériau à distribuer d'au moins un distributeur transporté, dans lequel l'animal transporte le distributeur au niveau d'un dispositif de fixation à l'animal et dans lequel le distributeur présente un mécanisme de délivrance destiné à délivrer la récompense sous forme de nourriture ou une partie de cette dernière, dont l'actionnement s'effectue par commande à distance au moyen d'au moins un émetteur de signal non transporté par l'animal, **caractérisé en ce que** la récompense sous forme de nourriture est délivrée dans un bac de récupération du distributeur qui est accessible par l'animal.

25. Procédé selon la revendication 24, **caractérisé en ce que** la délivrance du matériau à distribuer s'effectue dans une zone d'action de l'émetteur de signal indépendamment de la position de l'animal.

26. Procédé selon l'une quelconque des revendications précédentes, **caractérisé en ce que** la délivrance du matériau à distribuer s'effectue instantanément lors de l'actionnement commandé à distance.

27. Procédé selon l'une quelconque des revendications précédentes, **caractérisé en ce que** le matériau à distribuer est délivré à proximité immédiate de l'animal.

28. Procédé selon l'une quelconque des revendications précédentes, **caractérisé en ce que** le matériau à distribuer est délivré dans le but de récompenser un comportement de l'animal.
